# EUROPÄISCHE PATENTANMELDUNG

(11) **EP 4 821 870 A1**
(43) Veröffentlichungstag der Anmeldung: **14.10.2026**
(21) Anmeldenummer: 26169868.2
(22) Anmeldetag: 31.03.2026
(51) Int. Cl.: B66C 15/02

(54) **ROLLENSPERRFANGVORRICHTUNG UND ANORDNUNG**

(30) Priorität: 11.04.2025 DE 102025114455
(71) Anmelder: Winkel GmbH, 75428 Illingen (DE)
(72) Erfinder: WEISSER, Alexander, 75180 Pforzheim (DE); BERNHART, Jörg, 74321 Bietigheim-Bissingen (DE)
(74) Vertreter: Patentanwälte Ruff, Wilhelm, Beier, Dauster & Partner mbB

(57) **Zusammenfassung**

Rollensperrfangvorrichtung (10, 70, 100) mit einem Keilkörper (32), wenigstens einer Auslösevorrichtung, wobei die Auslösevorrichtung relativ zum Keilkörper (32) in einer Längsrichtung des Keilkörpers (32) bewegbar am Keilkörper (32) angeordnet ist, wenigstens zwei relativ zum Keilkörper (32) und zur Auslösevorrichtung drehbaren Fangrollen (16, 18, 110, 112), wobei der Keilkörper (32) an zwei einander gegenüberliegenden Seiten jeweils eine Anlaufschräge (34, 36, 118) für jeweils eine der Fangrollen (16, 18, 110, 112) aufweist, wobei sich ein Abstand der beiden Anlaufschrägen (34, 36, 118) zueinander in der Längsrichtung des Keilkörpers (32) vergrößert, so dass die beiden Anlaufschrägen (34, 36, 118) V-artig angeordnet sind und ein senkrecht zur Längsrichtung gemessener Abstand der Anlaufschrägen (34, 36, 118) zueinander in einem Anfangsbereich kleiner ist als in einem Endbereich, wobei bei einer Bewegung der Auslösevorrichtung in der Längsrichtung relativ zum Keilkörper (32) die Fangrollen (16, 18, 110, 112) von einer Freigabeposition, in der die Fangrollen (16, 18, 110, 112) im Anfangsbereich der jeweils zugeordneten Anlaufschräge (34, 36, 118) angeordnet sind, in Richtung des Endbereichs der jeweils zugeordneten Anlaufschräge (34, 36, 118) in Richtung einer Sperrposition bewegt werden.

## Beschreibung

Die Erfindung betrifft eine Rollensperrfangvorrichtung. Die Erfindung betrifft weiter eine Anordnung mit einer Verfahreinrichtung, insbesondere einer Hubeinrichtung, wenigstens einer, insbesondere vertikal angeordneten, Verfahrschiene, wobei die Verfahreinrichtung entlang der wenigstens einen Verfahrschiene bewegbar ist und wobei die Verfahrschiene einen U-artigen Querschnitt oder einen I-artigen Querschnitt mit einer Basis und wenigstens zwei von der Basis ausgehenden und einander gegenüberliegenden Schenkeln aufweist, und mit einer Rollensperrfangvorrichtung.

Verfahreinrichtungen, insbesondere Hubeinheiten und Verfahreinheiten, sind bekannt und werden in allen Industriebereichen eingesetzt, beispielsweise als Palettenheber, allgemein im Bereich des Materialhandlings oder auch als Automobilheber in der Fertigung oder in der Logistik.

Mit der Erfindung sollen eine Rollensperrfangvorrichtung und eine Anordnung verbessert werden.

Erfindungsgemäß ist hierzu eine Rollensperrfangvorrichtung mit den Merkmalen von Anspruch 1 beziehungsweise eine Anordnung mit den Merkmalen von Anspruch 12 vorgesehen. Vorteilhafte Weiterbildungen der Erfindung sind in den Unteransprüchen genannt.

Eine Rollensperrfangvorrichtung weist einen Keilkörper, wenigstens eine Auslösevorrichtung, wobei die Auslösevorrichtung relativ zum Keilkörper in einer Längsrichtung des Keilkörpers bewegbar am Keilkörper angeordnet ist, und wenigstens zwei relativ zum Keilkörper und zur Auslösevorrichtung drehbare Fangrollen auf, wobei der Keilkörper an zwei einander gegenüberliegenden Seiten jeweils eine Anlaufschräge für jeweils eine der Fangrollen aufweist, wobei sich ein Abstand der beiden Anlaufschrägen zueinander in der Längsrichtung des Keilkörpers vergrößert, so dass die beiden Anlaufschrägen V-artig angeordnet sind und ein senkrecht zur Längsrichtung gemessener Abstand der Anlaufschrägen zueinander in einem Anfangsbereich kleiner ist als in einem Endbereich, wobei bei einer Bewegung der Auslösevorrichtung in der Längsrichtung relativ zum Keilkörper die Fangrollen von einer Freigabeposition, in der die Fangrollen im Anfangsbereich der jeweils zugeordneten Anlaufschräge angeordnet sind, in Richtung des Endbereichs der jeweils zugeordneten Anlaufschräge in eine Sperrposition bewegt werden.

Die Rollensperrfangvorrichtung kann dadurch einen symmetrischen Aufbau aufweisen und ist für eine Verfahrschiene mit U-förmigem Querschnitt oder I-förmigem Querschnitt geeignet. Die Rollensperrfangvorrichtung kann äußerst kompakt aufgebaut werden und kann insbesondere zwischen den Schenkeln einer U- oder I-Schiene angeordnet werden. Die Rollensperrfangvorrichtung benötigt dadurch kaum oder sogar keinen zusätzlichen Bauraum und ist daher insbesondere für die Nachrüstung bestehender Verfahreinrichtungen in besonderer Weise geeignet. Durch den symmetrischen Aufbau kann die Rollensperrfangvorrichtung sehr kompakt aufgebaut werden, da die bei einem Brems- beziehungsweise Sperrvorgang an den Fangrollen auftretenden Kräfte an zwei gegenüberliegenden Seiten in den Keilkörper eingeleitet werden und sich zumindest teilweise gegenseitig aufheben. Die U- oder I-Schiene muss selbstverständlich eine ausreichende Statik haben, mit anderen Worten ausreichend stabil aufgebaut sein, um den Kräften, die beim Angreifen der Fangrollen an der Schiene und dem dadurch verursachten Bremsvorgang auftreten, problemlos standhalten zu können. Die Auslösevorrichtung kann in verschiedenster Weise ausgebildet sein. Die Fangrollen können mechanisch, elektrisch, pneumatisch oder auch hydraulisch von der Freigabeposition in eine Kontaktposition bewegt werden, ausgehend von der sich die Fangrollen, wenn sich die Verfahreinrichtung relativ zur Verfahrschiene bewegt, selbstätig in die Sperrposition bewegen. Die Auslösevorrichtung kann auch dann, wenn sie mechanisch arbeitet, beispielsweise mit Hebeln, Schiebern und/oder Gestängen, die vertikal oder lateral angeordnet sind, elektromagnetisch, elektromechanisch, beispielsweise mittels eines Elektromotors, pneumatisch oder auch hydraulisch aktiviert werden.

In Weiterbildung der Erfindung weisen die wenigstens zwei Fangrollen jeweils wenigstens einseitig einen Achsstummel auf, insbesondere beidseitig Achsstummel auf, wobei der Achsstummel in einer Kulissenführung angeordnet ist.

Auf diese Weise können die Fangrollen beim Übergang von einer Freigabeposition in eine Sperrposition sicher geführt werden. Die Kulissenführungen verhindern, dass die Rollensperrfangeinrichtung unbeabsichtigt bei Erschütterungen oder starken Beschleunigen der Verfahreinrichtung ausgelöst wird. Die Fangrollen werden mittels der Kulissenführungen in der Freigabestellung gehalten und können beispielsweise auch bei Erschütterungen nicht verkippen, so dass keine unbeabsichtigte Auslösung der Rollensperrfangeinrichtung erfolgen kann.

In Weiterbildung der Erfindung ist wenigstens eine Kulissenplatte vorgesehen, die mit Kulissenführungen für die Fangrollen versehen ist.

Mit Kulissenführungen kann eine gute und zuverlässige Führung der Fangrollen bei leichter Drehbarkeit der Fangrollen und flachem Aufbau der Rollensperrfangvorrichtung erzielt werden. Ein flacher Aufbau der Rollensperrfangvorrichtung ermöglicht es, diese vollständig zwischen den Schenkeln der Verfahrschiene anzuordnen, so dass außerhalb einer durch die Verfahrschiene vorgegebenen Kontur kein zusätzlicher Bauraum benötigt wird.

In Weiterbildung der Erfindung ist der Keilkörper zwischen zwei Kulissenplatten angeordnet, die jeweils mit Kulissenführungen für die Fangrollen versehen sind.

Auf diese Weise kann eine gute und zuverlässige Führung der Fangrollen und gleichzeitig eine leicht drehbare Anordnung der Fangrollen bei flachem Aufbau der Rollensperrfangvorrichtung realisiert werden.

In Weiterbildung der Erfindung weist die Auslösevorrichtung zwei Auslösebleche auf, wobei jedes der Auslösebleche an jeweils einer der Fangrollen angreift und jedes Auslöseblech in und entgegen der Längsrichtung bewegbar am Keilkörper gehalten ist.

Auf diese Weise wird ein sehr einfacher Aufbau realisiert, mit dem zuverlässig ein Sperrvorgang ausgelöst werden kann.

In Weiterbildung der Erfindung greifen die Auslösebleche am Umfang der Fangrollen an.

Mittels der Auslösebleche werden die Fangrollen so weit aus ihrer Freigabestellung bewegt, bis der Außenumfang der Fangrollen in Kontakt mit der Verfahrschiene kommt. Ausgehend von diesem Punkt, der auch als Kontaktposition bezeichnet werden kann, bewegen sich die Fangrollen dann selbsttätig in den sich verjüngenden Spalt zwischen dem Keilkörper und der Verfahrschiene hinein.

In Weiterbildung der Erfindung weist jedes Auslöseblech einen sich parallel zur Längsrichtung erstreckenden Abschnitt und einen gegenüber der Längsrichtung in Richtung auf den Keilkörper zu abgewinkelten Abschnitt auf, wobei ein Umfang der dem Auslöseblech zugeordneten Fangrolle in der Freigabeposition auf dem abgewinkelten Abschnitt aufliegt.

Durch Bewegen des abgewinkelten Abschnitts des Auslöseblechs wird die Fangrolle in eine Position bewegt, in der ihr Umfang die Verfahrschiene kontaktiert und von dem ausgehend sich die Fangrolle dann selbsttätig in die Sperrposition bewegt.

In Weiterbildung der Erfindung weist jedes Auslöseblech unmittelbar vor dem Übergang von dem sich in Längsrichtung erstreckenden Abschnitt in den abgewinkelten Abschnitt eine Durchgangsöffnung auf, deren Größe auf den Umfang der Fangrolle abgestimmt ist, so dass in der Sperrposition ein Umfang der Fangrolle zumindest abschnittsweise durch die Durchgangsöffnung hindurchragen kann.

Dadurch wird zum einen ein zuverlässiges und sicheres Bewegen der Fangrolle bei einer Bewegung der Auslösebleche sichergestellt und es ist weiter sichergestellt, dass der Umfang der Fangrolle in Kontakt mit der Verfahrschiene gelangen kann.

In Weiterbildung der Erfindung weist die Auslösevorrichtung eine Auslösewippe oder ein Auslöseteil auf, die bzw. das parallel zur Längsrichtung bewegbar am Keilkörper gehalten ist.

Die Auslösewippe oder das Auslöseteil kann relativ zum Keilkörper vorgespannt sein. Beispielsweise kann mittels einer Feder eine Vorspannung zwischen Keilkörper und Auslösewippe/Auslöseteil erreicht werden. Die Fangrollen sind mit der Auslösewippe/dem Auslöseteil verbunden und können zusammen mit der Auslösewippe/dem Auslöseteil relativ zum Keilkörper bewegt werden. Insbesondere können die Auslösebleche beispielsweise in die Auslösewippe lediglich eingehängt werden.

In Weiterbildung der Erfindung greift die Auslösewippe/das Auslöseteil an den Fangrollen an.

Auf diese Weise können die Fangrollen zuverlässig relativ zum Keilkörper bewegt werden. Beispielsweise weist die Auslösewippe/das Auslöseteil an beiden Enden jeweils einen Führungsschlitz auf, wobei jeweils eine Fangrolle in einem Führungsschlitz geführt ist.

In Weiterbildung der Erfindung ist ein parallel zur Längsrichtung verlaufender und mit dem Keilkörper verbundener Führungsbolzen vorgesehen, wobei die Auslösewippe mit einer Durchgangsöffnung versehen ist, durch die sich der Führungsbolzen hindurch erstreckt.

Mittels des Führungsbolzens kann somit eine Führung der Auslösewippe während einer Bewegung relativ zum Keilkörper realisiert werden.

In Weiterbildung der Erfindung ist der Führungsbolzen von wenigstens einer Schraubenfeder umgeben, die die Auslösevorrichtung, insbesondere die Auslösewippe, relativ zum Keilkörper vorspannt.

Eine Vorspannung der Auslösevorrichtung kann dabei in Richtung der Sperrposition oder in Richtung der Freigabeposition erfolgen, je nach dem vorgesehenen Anwendungszweck der Rollensperrfangvorrichtung. Beispielsweise kann dann, wenn eine mechanische Auslösung der Rollensperrfangvorrichtung vorgesehen ist, die Auslösevorrichtung in die Freigabeposition vorgespannt sein. Bei einer elektromagnetischen Auslösung kann vorgesehen sein, die Auslösevorrichtung in die Sperrposition vorzuspannen. Um die unterschiedlichen Vorspannrichtungen zu realisieren, können die Schraubenfedern oberhalb oder unterhalb der Auslösewippe angeordnet sein.

In Weiterbildung der Erfindung ist die Auslösevorrichtung mit einer in Längsrichtung verlaufenden Betätigungsstange verbunden.

Beispielsweise ist die Auslösewippe gelenkig mit einer Betätigungsstange verbunden.

In Weiterbildung der Erfindung weist die Betätigungsstange wenigstens zwei, in Längsrichtung voneinander beabstandete Verdickungen auf, wobei die Betätigungsstange mittels der Verdickungen an einem Gehäuse geführt ist.

Mittels der Verdickungen kann die Betätigungsstange zuverlässig, beispielsweise in einer Führungsnut, geführt werden.

In Weiterbildung der Erfindung ist die Auslösevorrichtung mit einem Aktor verbunden.

Der Aktor kann elektromagnetisch, elektromechanisch, beispielsweise als Elektromotor, pneumatisch oder hydraulisch ausgebildet sein.

In Weiterbildung der Erfindung ist der Aktor an einem mit dem Keilkörper, insbesondere starr, verbundenen Haltebauteil, insbesondere an einer Kulissenplatte, angeordnet.

Auf diese Weise kann der Aktor in kompakter Weise angeordnet werden und die gesamte Rollensperrfangvorrichtung kann insgesamt so flach aufgebaut werden, dass sie vollständig zwischen den einander gegenüberliegenden Schenkeln einer U-förmigen oder I-förmigen Schiene angeordnet ist und keinen zusätzlichen Bauraum benötigt.

Eine Anordnung weist eine Verfahreinrichtung, insbesondere eine Hubeinrichtung, wenigstens eine, insbesondere vertikal angeordnete, Verfahrschiene, wobei die Verfahreinrichtung entlang der wenigstens einen Verfahrschiene bewegbar ist, wobei die Verfahrschiene einen U-artigen Querschnitt oder einen I-artigen Querschnitt mit einer Basis und wenigstens zwei von der Basis ausgehenden und einander gegenüberliegenden Schenkeln aufweist, sowie eine Rollensperrfangvorrichtung auf. Die Rollensperrfangvorrichtung ist mit der Verfahreinrichtung verbunden, wobei wenigstens der Keilkörper und die wenigstens zwei Fangrollen zwischen den zwei einander gegenüberliegenden Schenkeln der Verfahrschiene angeordnet sind, wobei jeweils mindestens eine erste Fangrolle der Rollensperrfangvorrichtung in einer Freigabeposition unmittelbar benachbart, aber beabstandet zu der Innenseite eines ersten Schenkels angeordnet ist und in einer Sperrposition an der Innenseite des ersten Schenkels anliegt, und wobei mindestens eine zweite Fangrolle der Rollensperrfangvorrichtung in einer Freigabeposition unmittelbar benachbart, aber beabstandet zu der Innenseite eines zweiten Schenkels angeordnet ist und in einer Sperrposition an der Innenseite des zweiten Schenkels anliegt.

Die Basis der Schiene kann auch als Steg und die Schenkel der Schienen können auch als Flansche der Schiene bezeichnet werden. Die Rollensperrfangvorrichtung hat dadurch, dass sie an den Innenseiten von zwei gegenüberliegenden Schenkeln mit ihren Fangrollen angreift, nur einen sehr geringen Platzbedarf. Die Rollensperrfangvorrichtung kann innerhalb der Schiene angeordnet werden, braucht daher kaum oder sogar keinen zusätzlichen Bauraum und kann in der Regel problemlos nachgerüstet werden.

In Weiterbildung der Erfindung ist die Rollensperrfangvorrichtung vollständig innerhalb einer Kontur angeordnet, die durch die Basis und die beiden gegenüberliegenden Schenkel der Schiene definiert ist.

Selbst bei sehr kurzen Schenkeln oder Flanschen der Schiene gelingt es, die Rollensperrfangvorrichtung vollständig innerhalb der Kontur anzuordnen, die durch die Basis, mit anderen Worten den Steg, und die beiden gegenüberliegenden Schenkel, mit anderen Worten die Flansche, der Schiene definiert ist.

In Weiterbildung der Erfindung sind Mittel zum Bewegen der Auslösevorrichtung relativ zum Keilkörper vorgesehen.

Diese Mittel können beispielsweise von einer Geschwindigkeitsüberwachungsvorrichtung mechanisch, elektrisch, pneumatisch oder hydraulisch aktiviert werden.

In Weiterbildung der Erfindung weisen die Mittel zum Bewegen einen Aktor auf, der, insbesondere mittels einer Betätigungsstange, mit der Auslösevorrichtung und mittels einer Halteplatte, die insbesondere als Kulissenplatte ausgebildet sein kann, mit dem Keilkörper verbunden ist, insbesondere starr mit dem Keilkörper verbunden ist.

Auf diese Weise wird eine funktionssichere und dabei kompakte Rollensperrfangvorrichtung geschaffen. Die vollständige Rollensperrfangvorrichtung einschließlich des Aktors kann innerhalb einer Kontur angeordnet werden, die durch die Basis und die beiden gegenüberliegenden Schenkel der Verfahrschiene definiert ist, so dass kein zusätzlicher Bauraum benötigt wird. Der Aktor kann elektromagnetisch, elektromechanisch, beispielsweise als Elektromotor, pneumatisch oder hydraulisch ausgebildet sein.

In Weiterbildung der Erfindung verläuft die Verfahrschiene in vertikaler Richtung und die Verfahreinrichtung ist als Hub- oder Absenkeinrichtung ausgebildet.

Weitere Merkmale und Vorteile der Erfindung ergeben sich aus den Ansprüchen und der folgenden Beschreibung bevorzugter Ausführungsform der Erfindung im Zusammenhang mit den Zeichnungen. Einzelmerkmale der unterschiedlichen, dargestellten und/oder beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine Ansicht von schräg oben einer erfindungsgemäßen Rollensperrfangvorrichtung gemäß einer ersten Ausführungsform,
- Fig. 2: die Rollensperrfangvorrichtung der Fig. 1 bei abgenommener, vorderer Kulissenplatte,
- Fig. 3: eine abschnittsweise geschnittene Darstellung einer Anordnung mit der Rollensperrfangvorrichtung im Zustand der Fig. 2 und einer teilweise geschnittenen Verfahrschiene,
- Fig. 4: eine Schnittansicht der Anordnung der Fig. 3,
- Fig. 5: eine Ansicht einer erfindungsgemäßen Rollensperrfangvorrichtung gemäß einer zweiten Ausführungsform von schräg oben bei abgenommener vorderer Kulissenplatte,
- Fig. 6: eine Anordnung mit der Rollensperrfangvorrichtung der Fig. 5 und einer teilweise geschnittenen Verfahrschiene,
- Fig. 7: eine teilweise geschnittene Darstellung der Anordnung der Fig. 6,
- Fig. 8: eine schematische Draufsicht auf eine Anordnung mit einer Verfahrschiene mit U-förmigem Querschnitt einer Rollensperrfangvorrichtung und einer Verfahreinrichtung,
- Fig. 9: eine schematische Draufsicht auf eine Anordnung mit einer I-artigen Verfahrschiene und einer Rollensperrfangvorrichtung,
- Fig. 10: eine Ansicht einer Rollensperrfangvorrichtung gemäß einer weiteren Ausführungsform der Erfindung von schräg vorne,
- Fig. 11: eine erste Explosionsansicht der Rollensperrfangvorrichtung der Fig. 10,
- Fig. 12: eine zweite Explosionsansicht der Rollensperrfangvorrichtung der Fig. 10,
- Fig. 13: eine dritte Explosionsansicht der Rollensperrfangvorrichtung der Fig. 10,
- Fig. 14: eine Ansicht der Rollensperrfangvorrichtung der Fig. 10 im teilweise zerlegten Zustand,
- Fig. 15: eine Teilschnittansicht der Rollensperrfangvorrichtung der Fig. 10 und
- Fig. 16: eine Vorderansicht der Rollensperrfangvorrichtung der Fig. 10 im teilweise zerlegten Zustand.

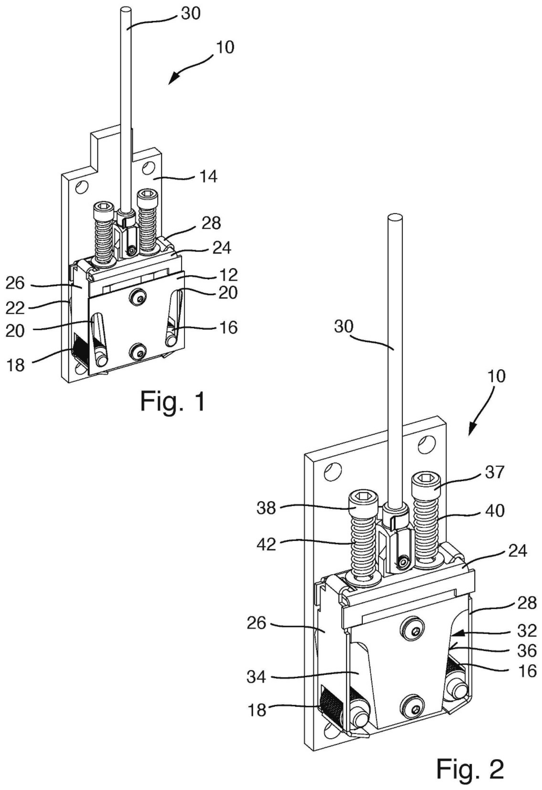

Fig. 1 zeigt eine erfindungsgemäße Rollensperrfangvorrichtung 10 gemäß einer ersten Ausführungsform der Erfindung. Die Rollensperrfangvorrichtung 10 weist eine vordere Kulissenplatte 12 und eine hintere Kulissenplatte 14 auf, zwischen denen ein in Fig. 1 verdeckter Keilkörper, vgl. Fig. 2, angeordnet ist. Die Kulissenplatten 12, 14 sind mittels Schrauben starr mit dem Keilkörper 32 verbunden. Der Keilkörper 32 mit einer oder auch mit beiden Kulissenplatten 12,14 kann auch einstückig ausgebildet und beispielsweise aus einem massiven Teil gefertigt sein. Die hintere Kulissenplatte kann mit einer nicht dargestellten Verfahreinrichtung, beispielsweise einer Hubeinrichtung, verbunden sein. Zwei Fangrollen 16, 18 weisen jeweils zu beiden Seiten Achsstummel auf, wobei die Achsstummel in Kulissenführungen 20 der vorderen Kulissenplatte 12 beziehungsweise in Kulissenführungen 22 der hinteren Kulissenplatte 14 angeordnet sind, die in Fig. 1 lediglich in einem sehr kleinen Abschnitt zu erkennen ist. Die Fangrollen 18 können sich infolgedessen ausgehend von der in Fig. 1 dargestellten Lage nach oben und leicht nach außen bewegen.

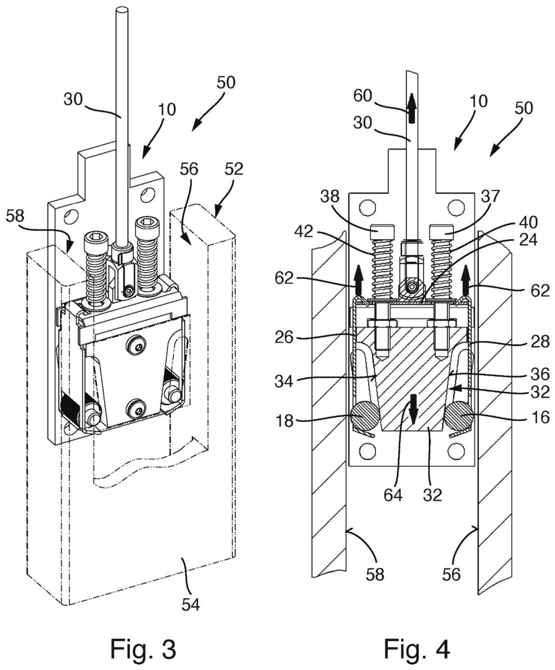

Die Fangrollen 16, 18 befinden sich im Zustand der Fig. 1 in einer Freigabeposition am unteren Ende der Kulissenführungen 20, 22. In dieser Freigabeposition ist der Umfang der Fangrollen 16, 18 von den Innenseiten der Schenkel einer Verfahrschiene, vgl. Fig. 3 und Fig. 4, beabstandet. Wenn die Rollensperrfangvorrichtung 10, die in der Regel starr mit einer Verfahreinrichtung verbunden ist, sich relativ zur Verfahrschiene bewegt, werden die Fangrollen 16, 18 somit nicht in Drehung versetzt.

Erst dann, wenn die Fangrollen von der in Fig. 1 dargestellten Freigabeposition in Richtung einer Sperrposition bewegt werden, in Fig. 4 also nach oben, berührt der Außenumfang der Fangrollen einerseits die Innenseiten der Schenkel der Verfahrschiene sowie auch Anlaufschrägen des Keilkörpers. Die Fangrollen werden dann zwischen dem Keilkörper und den Innenseiten der Schenkel der Verfahrschiene eingeklemmt, wenn sich die Verfahreinrichtung in entgegengesetzter Richtung, in Fig. 1 also nach unten, bewegt. Die Fangrollen sorgen dadurch dafür, dass die Rollensperrfangvorrichtung 10 und damit auch die mit der Rollensperrfangvorrichtung 10 verbundene Verfahreinrichtung bis zum Stillstand abgebremst wird.

Um die Fangrollen 16, 18 aus der Freigabeposition der Fig. 1 herauszubewegen, ist eine Auslösevorrichtung vorgesehen, die eine Auslösewippe 24, die auch als Auslöseteil bezeichnet werden kann, und zwei an der Auslösewippe 24 eingehängte Auslösebleche 26, 28 aufweist. Die Auslösewippe 24 wird bei der dargestellten Ausführungsform mittels einer Betätigungsstange 30 relativ zum Keilkörper bewegt, in Fig. 1 nach oben. Dadurch werden die beiden Fangrollen 16, 18 mittels der Auslösebleche relativ zum Keilkörper nach oben verschoben, bis der Außenumfang jeder Fangrolle, vgl. Fig. 4, einerseits mit der benachbarten Innenseite eines Schenkels der Verfahrschiene und andererseits mit der benachbarten Anlaufschräge des Keilkörpers in Kontakt kommt. Die Fangrolle bewegt sich ausgehend von dieser Kontaktposition dann noch selbsttätig ein Stück entlang der Anlaufschräge des Keilkörpers nach oben, bis in einer Sperrposition Selbstsperrung auftritt und eine Relativbewegung zwischen Rollensperrfangvorrichtung 10 und der Verfahrschiene vollständig abgebremst ist.

Fig. 2 zeigt die Rollensperrfangvorrichtung der Fig. 1 bei abgenommener vorderer Kulissenplatte 12. In dieser Ansicht ist der Keilkörper 32 zu erkennen. Der Keilkörper 32 weist eine in Fig. 2 linke Anlaufschräge 34 und eine in Fig. 2 verdeckte rechte Anlaufschräge 36 auf. Die beiden Anlaufschrägen 34, 36 sind schräg zu einer Längsrichtung des Keilkörpers 32, die in Fig. 2 von unten nach oben verläuft, angeordnet, so dass sich ein senkrecht zur Längsrichtung gemessener Abstand zwischen den beiden Anlaufschrägen 34, 36 in der Längsrichtung vergrößert. Die beiden Anlaufschrägen 34, 36 sind dadurch V-artig zueinander angeordnet. An dem in Fig. 2 oberen Ende der Anlaufschrägen 34, 36 gehen diese in eine Ausrundung über, die zur jeweiligen Außenseite des Keilkörpers 32 läuft. Diese Ausrundung kann einen Notanschlag bieten, wenn die Fangrollen 16, 18 während eines Bremsvorgangs tatsächlich so weit nach oben verschoben werden, dass ihr Außenumfang an der jeweiligen Ausrundung am Ende der jeweiligen Anlaufschräge 34, 36 anliegt.

In Fig. 2 ist auch gut zu erkennen, dass jedes der Auslösebleche 26, 28 an einem oberen Ende eine hakenförmige Ausbildung aufweist, die jeweils in die Auslösewippe 24 eingehängt ist. Die Auslösewippe 24 kann dadurch die beiden Auslösebleche 26, 28 mitnehmen, wenn sie ausgehend von der Freigabeposition der Fig. 2 relativ zum Keilkörper 32 nach oben gezogen wird. Die Auslösewippe 24 weist einen U-artigen Querschnitt auf. Die Auslösebleche 26, 28 sind jeweils in Durchgangsöffnungen in der Basis der Auslösewippe 24 eingehängt. Die Enden der Schenkel der Auslösewippe 24 liegen abschnittsweise an Seitenkanten der Auslösebleche 26, 28 an, so dass eine Position der Auslösebleche 26, 28 stabilisiert wird und insbesondere ein Pendeln der Auslösebleche 26, 28 in seitlicher Richtung, in Fig. 2 also in die Zeichenebene hinein beziehungsweise heraus, verhindert ist.

Die Auslösebleche 26, 28 weisen jeweils einen parallel zur Längsrichtung verlaufenden Abschnitt und an dem der hakenförmigen Ausbildung, die in die Auslösewippe 24 eingehängt ist, gegenüberliegenden Ende jeweils einen abgewinkelten Abschnitt auf. Die abgewinkelten Abschnitte sind nach innen zum Keilkörper 32 hin abgewinkelt und der Außenumfang der Fangrollen 16, 18 liegt auf dem jeweiligen abgewinkelten Abschnitt auf.

Wird die Auslösewippe 24 mittels einer Bewegung der Betätigungsstange 30 relativ zum Keilkörper 32 nach oben bewegt, werden infolgedessen auch die Auslösebleche 26, 28 nach oben bewegt und die Fangrollen 16, 18 werden ebenfalls relativ zum Keilkörper 32 nach oben verschoben. Die Fangrollen 16, 18 kommen dadurch in Kontakt mit den Anlaufschrägen des Keilkörpers, vgl. Fig. 4, und werden dadurch während der Bewegung nach oben gleichzeitig nach außen bewegt, bis sie in Kontakt mit den Innenseiten der Schenkel der Verfahrschiene kommen, wodurch ein Bremsvorgang eingeleitet wird.

Der Keilkörper 32 ist mit zwei Führungsbolzen 37, 38 versehen, die parallel zur Längsrichtung angeordnet sind und bei der dargestellten Ausführungsform als Schraubbolzen ausgebildet sind. Die Führungsbolzen 37, 38 sind beispielsweise in Gewindebohrungen des Keilkörpers 32 eingeschraubt, vgl. Fig. 4. Jeder der Führungsbolzen 37, 38 ist zwischen einem Schraubenkopf und der Auslösewippe 24 von einer Schraubenfeder 40, 42 umgeben. Die Schraubenfedern 40, 42 üben auf die Auslösewippe 24 eine Vorspannkraft in Richtung auf den Keilkörper 32 aus. Mittels der Schraubenfedern 40, 42 wird infolgedessen die Rollensperrfangvorrichtung 10 in die Freigabeposition der Fig. 1 und der Fig. 2 vorgespannt.

Wie bereits ausgeführt wurde, muss zum Auslösen der Rollensperrfangvorrichtung die Betätigungsstange 30 ausgehend von dem in Fig. 2 dargestellten Zustand gegen die Wirkung der Schraubenfedern 40, 42 nach oben bewegt werden. Dadurch wird auch die Auslösewippe 24 relativ zum Keilkörper 32 nach oben bewegt und mittels der Auslösebleche 26, 28 werden die Fangrollen 16, 18 von der Freigabeposition in Richtung auf in eine Sperrposition bewegt. Bei der dargestellten Ausführungsform wird die Auslösevorrichtung mechanisch ausgelöst. Alternativ kann die Auslösevorrichtung auch dann, wenn sie mechanisch arbeitet, beispielsweise mit Hebeln, Schiebern und/oder Gestängen, das vertikal oder lateral angeordnet ist, elektromagnetisch, elektromechanisch, beispielsweise mittels eines Elektromotors, pneumatisch oder auch hydraulisch aktiviert werden.

Fig. 3 zeigt eine Anordnung 50 mit der Rollensperrfangvorrichtung 10 der Fig. 1 und 2 und einer abschnittsweise geschnitten dargestellten Verfahrschiene 52. Die Verfahrschiene 52 weist eine Basis 54, die auch als Steg bezeichnet werden kann, und zwei senkrecht zur gleichen Seite von der Basis 54 abragende Schenkel 56, 58 auf, die auch als Flansche bezeichnet werden können. Die Verfahrschiene 52 ist in Fig. 3 teilweise geschnitten und teilweise gestrichelt dargestellt, um die Lage der Rollensperrfangvorrichtung 10 in der Verfahrschiene 52 zu verdeutlichen.

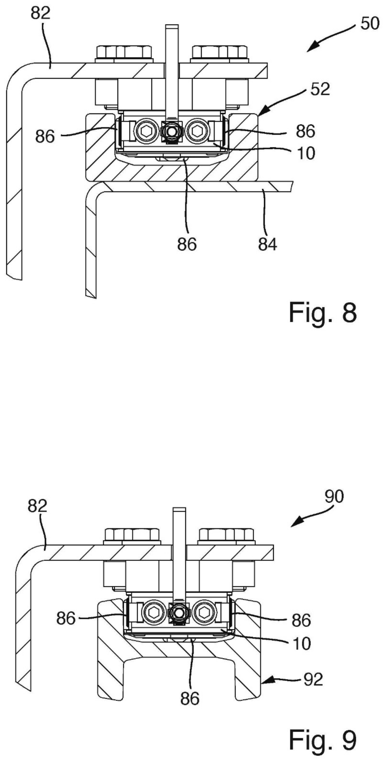

Es ist Fig. 3 zu entnehmen, dass die Rollensperrfangvorrichtung 10 vollständig innerhalb einer Kontur angeordnet ist, vgl. auch Fig. 8, die durch die Basis 54 und die beiden Schenkel 56, 58 der Verfahrschiene 52 definiert ist. Mit anderen Worten ragt die Rollensperrfangvorrichtung 10 nicht über die freien Enden der beiden Schenkel 56, 58 vor. Dadurch kann die Rollensperrfangvorrichtung 10 äußerst platzsparend und ohne zusätzlichen Bauraum zu benötigen, angeordnet werden. Die Rollensperrfangvorrichtung 10 kann dadurch in sehr einfacher Weise an bestehenden Verfahreinrichtungen nachgerüstet werden.

Fig. 4 zeigt eine Schnittansicht der Anordnung 50 der Fig. 3. Die Rollensperrfangvorrichtung 10 ist zwischen den beiden Schenkeln 56, 58 der Verfahrschiene 52 angeordnet. Im Zustand der Fig. 4 befinden sich die Fangrollen 16, 18 in der Freigabeposition. Ein Außenumfang der Fangrollen 16, 18 berührt bereits die jeweils zugeordnete Anlaufschräge 32, 34 des Keilkörpers 32. Der Außenumfang der Fangrollen 16, 18 liegt darüber hinaus auf dem abgewinkelten Abschnitt der Auslösebleche 26, 28 auf. Es ist zu erkennen, dass die Auslösebleche 26, 28 mit ihren in Fig. 4 oben dargestellten hakenförmig ausgebildeten Enden in Durchgangsöffnungen der Auslösewippe 24 eingehängt sind. Die Betätigungsstange 30 ist gelenkig mit der Auslösewippe 24 verbunden. Wird die Betätigungsstange 30 gemäß dem Pfeil 60 nach oben gezogen, werden auch die Auslösewippe 24 und die Auslösebleche 26, 28 gemäß den Pfeilen 62 nach oben bewegt. Eine solche Relativbewegung der Betätigungsstange 60 und der Auslösevorrichtung mit der Auslösewippe 24 und den Auslöseblechen 26, 28 relativ zum Keilkörper 32 findet während einer Bewegung der Rollensperrfangvorrichtung gemäß dem Pfeil 64 nach unten statt. Die gesamte Rollensperrfangvorrichtung 10 bewegt sich somit zusammen mit einer nicht dargestellten Verfahreinrichtung relativ zu den beiden Schenkeln 58, 56 nach unten. Wird die Betätigungsstange 30 gemäß dem Pfeil 60 relativ zum Keilkörper 32 nach oben bewegt, werden die Fangrollen 16, 18, die auf den abgewinkelten Abschnitten der Auslösebleche 26, 28 aufliegen, ebenfalls relativ zum Keilkörper 32 nach oben bewegt. Durch die V-artige Anordnung der beiden Anlaufschrägen 34, 36 vergrößert sich ein Abstand senkrecht zur Längsrichtung der beiden Fangrollen 16, 18, so dass der Außenumfang der Fangrollen 16, 18 mit der Bewegung der Auslösevorrichtung nach oben näher an die jeweils zugeordnete Innenseite der Schenkel 56, 58 gelangt.

Wenn die Fangrollen 16, 18 so weit relativ zum Keilkörper 32 nach oben verschoben wurden, bis der Außenumfang der Fangrolle 16 die Innenseite des Schenkels 56 und der Außenumfang der Fangrolle 18 die Innenseite des Schenkels 58 kontaktiert, führt die Bewegung der gesamten Rollensperrfangvorrichtung 10 gemäß dem Pfeil 64 nach unten dazu, dass sich die Fangrollen 16, 18 jeweils selbsttätig weiter in die sich verjüngenden Spalte zwischen den Anlaufschrägen 34, 36 und den Innenseiten der Schenkel 56, 58 hineinbewegen. Die Fangrolle 16 wird sich in den verjüngenden Spalt zwischen der Anlaufschräge 36 und der Innenseite des Schenkels 56 hineinbewegen. Die Fangrolle 18 wird sich in den sich verjüngenden Spalt zwischen der Anlaufschräge 34 und der Innenseite des Schenkels 58 hineinbewegen. Diese Bewegung in den jeweils sich verjüngenden Spalt hinein wird gestoppt, wenn Selbstsperrung erzielt wurde. Eine Bewegung entlang dem Pfeil 64 der Rollensperrfangvorrichtung 10 und einer mit der Rollensperrfangvorrichtung 10 verbundenen Verfahreinrichtung relativ zur Schiene mit den beiden Schenkeln 56, 58 wird dann bis zum Stillstand abgebremst.

Die Fig. 3 und 4 lassen erkennen, dass jedes der Auslösebleche 26, 28 unmittelbar vor dem Übergang in den jeweiligen abgewinkelten Abschnitt eine Durchgangsöffnung aufweist, die bei der dargestellten Ausführungsform rechteckig ist. Diese rechteckigen Durchgangsöffnungen ermöglichen es, dass sich die jeweilige Fangrolle 16, 18 mit ihrem Außenumfang durch die Durchgangsöffnung hindurch bis zu einer Kontaktposition, in der der Umfang der jeweiligen Fangrolle an der Innenseite des jeweils zugeordneten Schenkels 56, 58 anliegt, bewegt. Die seitlichen Stege der Auslösebleche, die die Durchgangsöffnung begrenzen, verhindern aber, dass die Achsstummel der Fangrollen 16, 18 durch die Durchgangsöffnung hindurch treten, so dass die Fangrollen 16, 18 in der in Fig. 3 und Fig. 4 dargestellten Freigabeposition verbleiben.

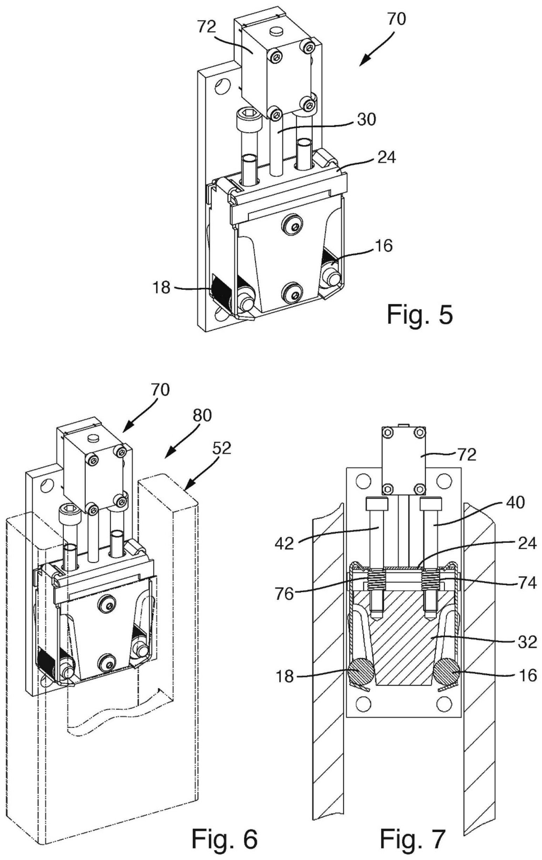

Fig. 5 zeigt eine weitere erfindungsgemäße Rollensperrfangvorrichtung 70 gemäß einer zweiten Ausführungsform der Erfindung. Nachfolgend werden lediglich die Unterschiede der Rollensperrfangvorrichtung 70 zur Rollensperrfangvorrichtung 10 der Fig. 1 bis 4 erläutert. Eine vordere Kulissenplatte ist im Zustand der Fig. 5 abgenommen und nicht dargestellt.

Bei der Rollensperrfangvorrichtung 70 wird die Betätigungsstange 30 gemäß der dargestellten Ausführungsform mittels eines elektromagnetischen Aktors 72 betätigt. Der Aktor kann aber elektromagnetisch, elektromechanisch, beispielsweise als Elektromotor, pneumatisch oder hydraulisch ausgebildet sein. Der elektromagnetische Aktor 72 bewegt die Auslösewippe 24 ebenfalls nach oben, um, wie bei der Rollensperrfangvorrichtung 10 der Fig. 1 bis 4, die Fangrollen 16, 18 ausgehend von der in Fig. 5 dargestellten Freigabeposition, vgl. auch die Fig. 6 und 7, in eine Sperrposition zu bewegen. Der elektromagnetische Aktor 72 ist an der in Fig. 5 hinteren Kulissenplatte befestigt.

Wie sich aus der Schnittansicht der Fig. 7 ergibt, sind Schraubenfedern 74, 76 so angeordnet, dass sie die Führungsbolzen 40, 42 umgeben. Die Schraubenfedern 74, 76 sind aber zwischen dem Keilkörper 32 und der Auslösewippe 24 angeordnet und spannen die Auslösewippe 24 somit in den Fig. 5 bis 7 nach oben vor. Die Rollensperrfangvorrichtung 70 der Fig. 5 bis 7 ist somit in die Sperrposition vorgespannt. Mittels des elektromagnetischen Aktors 72 wird die Auslösewippe 24 in die in den Fig. 5 bis 7 dargestellte Freigabeposition nach unten gedrückt. Dies erfolgt gegen die Wirkung der Schraubenfedern 74, 76. Wird der elektromagnetische Aktor 72 deaktiviert, so dass er also keine Druckkraft mehr auf die Betätigungsstange 30 ausübt, drücken infolgedessen die Schraubenfedern 74, 76 die Auslösewippe 24 nach oben, wodurch auch die beiden Fangrollen 16, 18 aus der Freigabeposition heraus relativ zum Keilkörper 32 nach oben in Richtung der Sperrposition bewegt werden. Die Auslösevorrichtung kann auch dann, wenn sie mechanisch arbeitet, beispielsweise mit Hebeln, Schiebern und/oder Gestängen, das vertikal oder lateral angeordnet ist, elektromagnetisch, elektromechanisch, beispielsweise mittels eines Elektromotors, pneumatisch oder auch hydraulisch aktiviert werden. Der Aktor kann elektromagnetisch, elektromechanisch, beispielsweise als Elektromotor, pneumatisch oder hydraulisch ausgebildet sein.

Fig. 6 zeigt eine teilweise geschnittene Ansicht einer Anordnung 80 mit der Rollensperrfangvorrichtung 70 der Fig. 5 und der Verfahrschiene 52. Es ist zu erkennen, dass auch die Rollensperrfangvorrichtung 70 vollständig innerhalb einer Kontur angeordnet werden kann, die durch die Basis und die Schenkel der Verfahrschiene 52 definiert ist.

Fig. 8 zeigt eine schematische Darstellung der Anordnung 50 mit der U-förmigen Verfahrschiene 52 und der innerhalb der Verfahrschiene 52 angeordneten Rollensperrfangvorrichtung 10. Weiter weist die Anordnung 50 eine Verfahreinrichtung 82 auf, die lediglich abschnittsweise schematisch dargestellt ist und die beispielsweise als Hubschlitten ausgeführt ist. Die Verfahreinrichtung 82 greift mit mehreren in Fig. 8 nur abschnittsweise erkennbaren Rollen 86 an der Verfahrschiene 52 an. Fig. 8 ist zu entnehmen, dass die erfindungsgemäße Rollensperrfangvorrichtung 10 äußerst kompakt aufgebaut ist und innerhalb der Verfahrschiene 52 angeordnet werden kann. Selbstverständlich ist die Rollensperrfangvorrichtung 10 starr mit der Verfahreinrichtung 82 verbunden. Die Verfahreinrichtung 82 kann an einer zweiten, ebenfalls u-förmigen Verfahrschiene angreifen, symmetrisch zur Verfahrschiene 52 auf einer in Fig. 8 untenliegenden Seite eines Mastes 84 angeordnet und in Fig. 8 nicht dargestellt ist.

Fig. 9 zeigt eine Anordnung 90 mit einer im Querschnitt I-förmigen Verfahrschiene 92 und der Rollensperrfangvorrichtung 10, die an der nur abschnittsweise dargestellten Verfahreinrichtung 82 montiert ist. Die Verfahreinrichtung 82 greift mit mehreren in Fig. 9 nur abschnittsweise erkennbaren Rollen 86 an der Verfahrschiene 92 an. Die Rollensperrfangvorrichtung 10 benötigt so wenig Bauraum, dass sie zwischen zwei einander gegenüberliegenden Schenkeln der 1-förmigen Schiene 92 angeordnet werden kann. Die Verfahreinrichtung 82 kann an einer zweiten, ebenfalls I-förmigen Verfahrschiene angreifen, die symmetrisch oder parallel zur Verfahrschiene 92 an einer in Fig. 9 nicht dargestellten untenliegenden Seite eines Mastes angeordnet und in Fig. 9 nicht dargestellt ist.

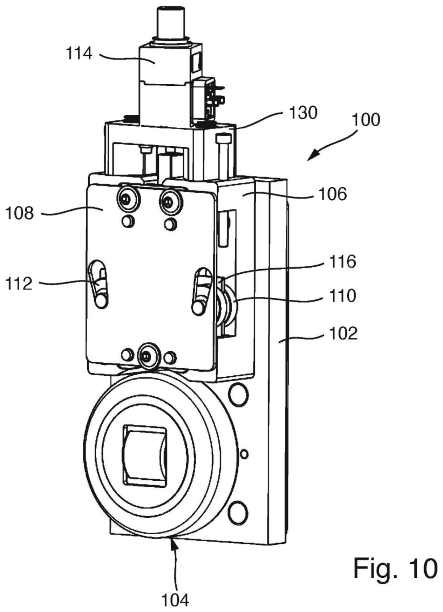

Fig. 10 zeigt eine Rollensperrfangvorrichtung 100 gemäß einer weiteren Ausführungsform der Erfindung. Die Rollensperrfangvorrichtung 100 weist eine Basisplatte 102 auf, wobei an der Basisplatte 102 eine Axialrolle 104 drehbar befestigt ist.

Ebenfalls an der Basisplatte 102 montiert ist ein Keilkörperbauteil 106. Auf dem Keilkörperbauteil 106 ist eine Kulissenplatte 108 angeordnet und zwischen der Kulissenplatte 108 und dem Keilkörperbauteil 106 sind eine Keilkörperplatte, die in Fig. 10 nicht zu erkennen ist, und zwei, in Fig. 10 lediglich abschnittsweise zu erkennende Fangrollen 110, 112 angeordnet. Wie bei den bereits beschriebenen Rollensperrfangvorrichtungen ist die Rollensperrfangvorrichtung 100 dafür vorgesehen, innerhalb der Kontur einer U-förmigen oder I-förmigen Verfahrschiene angeordnet zu werden, vgl. die Fig. 8 und 9. Die Fangrollen 110, 112 können mittels eines Aktors 114 relativ zu der in Fig. 10 dargestellten Lage nach oben bewegt werden und werden dadurch nach oben und außen verlagert. Dadurch verklemmen die Fangrollen 110, 112, wie bereits bei den erläuterten Rollensperrfangvorrichtungen beschrieben, zwischen einem in Fig. 10 nicht erkennbaren Keilkörper und der Verfahrschiene, die in Fig. 10 nicht dargestellt ist.

Die beiden Fangrollen 110, 112 sind mit einem Auslöseteil 116 verbunden, das auch als Auslösewippe bezeichnet werden kann. Wird das Auslöseteil 116 mittels des Aktors 114 nach oben gezogen, werden die Fangrollen 110, 112 ausgehend von der in Fig. 10 dargestellten Lage nach oben und nach außen bewegt.

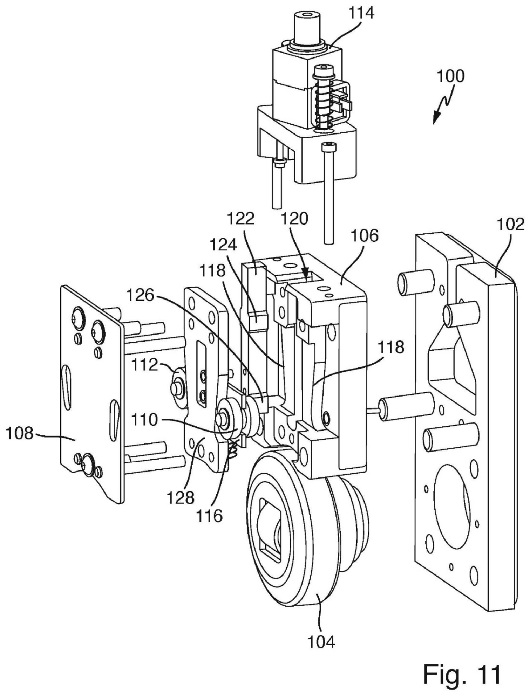

Fig. 11 zeigt eine erste Explosionsansicht der Rollensperrfangvorrichtung 100 der Fig. 10. Zu erkennen sind die Basisplatte 102, die Axialrolle 104 sowie das Keilkörperbauteil 106. Das Keilkörperbauteil 106 ist mit zwei einander gegenüberliegenden Anlaufschrägen 118 versehen, mittels der die Fangrollen 110, 112 nach außen verlagert werden.

Zwischen den beiden Anlaufschrägen 118 ist im Keilkörperbauteil 106 eine Führungsnut 120 für eine Betätigungsstange 122 vorgesehen. Die Betätigungsstange 122 ist einerseits mit dem Auslöseteil 116 und andererseits mit dem Aktor 114 verbunden. Wird die Betätigungsstange 122 mittels des Aktors 114 relativ zum Keilkörperbauteil 106 nach oben bewegt, werden über das Auslöseteil 116 die beiden Fangrollen 110, 112 mitgenommen und über die Anlaufschrägen 118 während einer Bewegung nach oben nach außen gedrückt. Wie bereits erläutert, gelangt der Umfang der Fangrollen 110, 112 dadurch in Kontakt mit den Laufbahnen der Verfahrschiene, wodurch ein Selbstsperreffekt erzielt wird.

Die Betätigungsstange 122 ist mit zwei Verdickungen 124, 126 versehen, die für eine sichere und leichtgängige Führung der Betätigungsstange 122 in dem Führungskanal 120 sorgen.

Die Fangrollen 110, 112 sind jeweils als Doppelrollen aufgebaut. Jede Doppelrolle weist zwei Einzelrollen auf, die in Längsrichtung der Achse voneinander beabstandet sind. Zwischen die Einzelrollen greift das Auslöseteil 116 ein. Das Auslöseteil 116 weist hierzu jeweils einen U-förmigen Schlitz an jedem Ende auf, in den ein Zwischenabschnitt zwischen den beiden Einzelrollen der Fangrollen 110 eingeführt ist.

Neben den Anlaufschrägen 118 des Keilkörperbauteils 106 ist eine Keilkörperplatte 128 vorgesehen, die ebenfalls mit zwei einander gegenüberliegenden Anlaufschrägen versehen ist. Die Anlaufschrägen der Keilkörperplatte 128 fluchten im montierten Zustand der Keilkörperplatte 128 mit den Anlaufschrägen 118 des Keilkörperbauteils 106. Die Anlaufschrägen der Keilkörperplatte 128 sind für die in Fig. 11 jeweils linke Einzelrolle der Fangrollen 110, 112 vorgesehen. Die Anlaufschrägen 118 sind für die in Fig. 11 jeweils rechte Einzelrolle der Fangrollen 110, 112 vorgesehen.

Auf der in Fig. 11 linken Seite der Fangrollen 110, 112 ragt jeweils ein Achsstummel der Fangrollen 110, 112 vor. Diese Achsstummel sind jeweils in einer der Kulissenführungen in der Kulissenplatte 108 geführt.

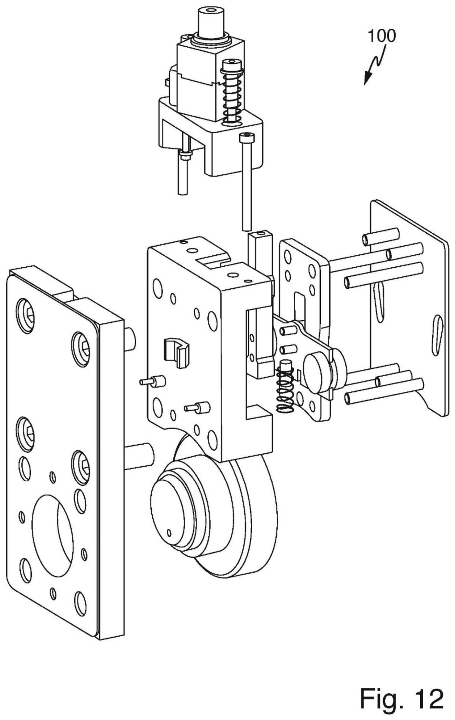

Die in Fig. 11 rechte, verdeckte Seite der Fangrollen 110, 112 weist keinen Achsstummel auf, vgl. Fig. 12.

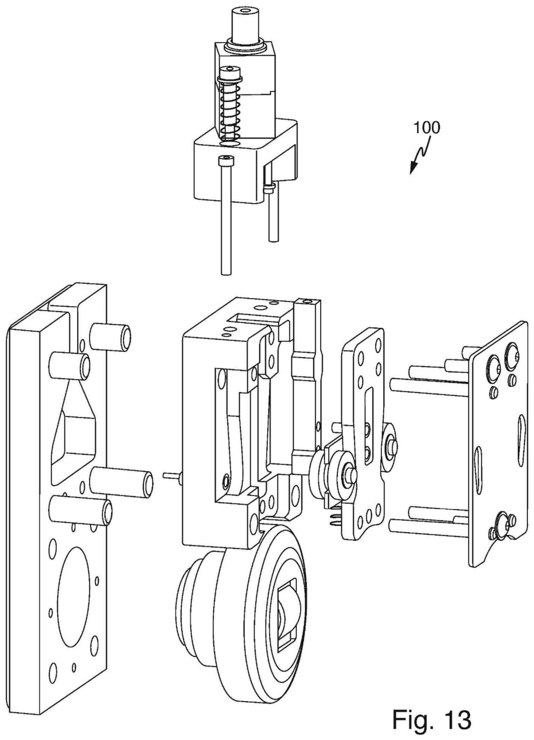

Fig. 12 zeigt die Explosionsansicht der Fig. 11 in einer Ansicht von hinten. Fig. 13 zeigt die Explosionsansicht der Fig. 11 aus einem weiteren Blickwinkel.

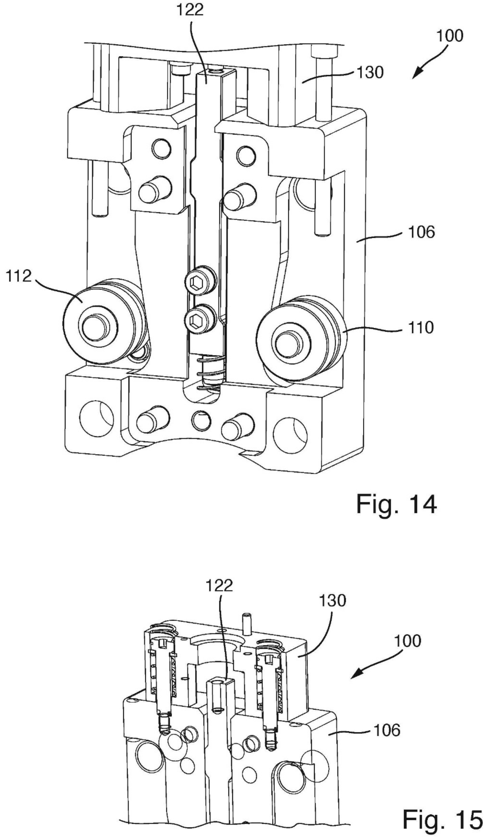

Fig. 14 zeigt die Rollensperrfangvorrichtung 100 der Fig. 10 im teilzerlegten abschnittsweise dargestellten Zustand. Im Zustand der Fig. 14 sind lediglich das Keilkörperbauteil 106 mit den beiden Fangrollen 110, 112, eine auf dem Keilkörperbauteil 106 angeordnete Spannplatte 130 in abschnittsweiser Darstellung und die Betätigungsstange 122 dargestellt.

Fig. 15 zeigt eine abschnittsweise, geschnittene Darstellung der Rollensperrfangvorrichtung 100 im teilweise zerlegten Zustand. Es ist in Fig. 15 zu erkennen, dass die Spannplatte 130 mittels Federn gegen das Keilkörperbauteil 106 vorgespannt ist und sich gegen die Wirkung dieser Federn relativ zum Keilkörperbauteil 106 nach oben bewegen kann. An der Spannplatte 130 ist der Aktor 114 befestigt, vgl. Fig. 10. Wird mittels des Aktors 114 die Betätigungsstange 122 nach oben gezogen, werden dadurch die Fangrollen 110, 112 nach oben bewegt und gleichzeitig über die Anlaufschrägen 118 nach außen bewegt. Die Fangrollen 110, 112 werden dann zwischen den Anlaufschrägen und den Laufbahnen der Verfahrschiene eingeklemmt und bis zum vollständigen Stillstand noch ein Stück weiter nach oben bewegt. Eine solche zusätzliche Bewegung kann mittels der Spannplatte 130 ausgeglichen werden, die sich dann zusammen mit dem Aktor 114 ein Stück weit nach oben bewegt.

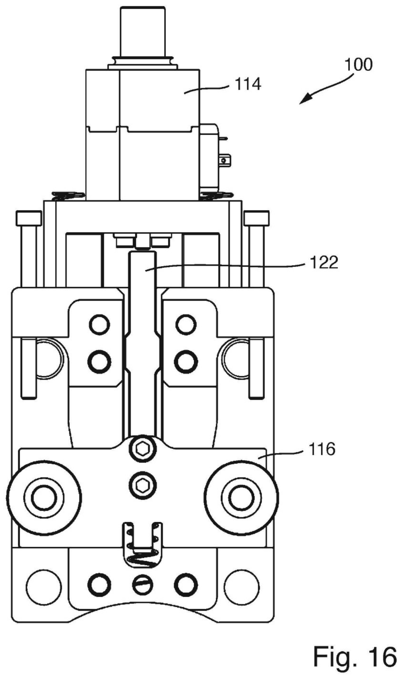

Fig. 16 zeigt die Rollensperrfangvorrichtung in einem teilweise zerlegten Zustand in einer Vorderansicht. Gegenüber dem Zustand der Fig. 14 ist das Auslöseteil 116 noch montiert, das mittels zwei Schrauben mit der Betätigungsstange 122 verbunden ist.

Insgesamt wird mittels der Erfindung eine äußerst funktionssichere und dabei kompakt aufgebaute Rollensperrfangvorrichtung 100 bereitgestellt, die innerhalb einer Kontur einer Verfahrschiene angeordnet werden kann.

## Patentansprüche

1. Rollensperrfangvorrichtung mit einem Keilkörper, wenigstens einer Auslösevorrichtung, wobei die Auslösevorrichtung relativ zum Keilkörper in einer Längsrichtung des Keilkörpers bewegbar am Keilkörper angeordnet ist, wenigstens zwei relativ zum Keilkörper und zur Auslösevorrichtung drehbaren Fangrollen, wobei der Keilkörper an zwei einander gegenüberliegenden Seiten jeweils eine Anlaufschräge für jeweils eine der Fangrollen aufweist, wobei sich ein Abstand der beiden Anlaufschrägen zueinander in der Längsrichtung des Keilkörpers vergrößert, so dass die beiden Anlaufschrägen v-artig angeordnet sind und ein senkrecht zur Längsrichtung gemessener Abstand der Anlaufschrägen zueinander in einem Anfangsbereich kleiner ist als in einem Endbereich, wobei bei einer Bewegung der Auslösevorrichtung in der Längsrichtung relativ zum Keilkörper die Fangrollen von einer Freigabeposition, in der die Fangrollen im Anfangsbereich der jeweils zugeordneten Anlaufschräge angeordnet sind, in Richtung des Endbereichs der jeweils zugeordneten Anlaufschräge in Richtung einer Sperrposition bewegt werden.

2. Rollensperrfangvorrichtung nach Anspruch 1, wobei die wenigstens zwei Fangrollen jeweils wenigstens einseitig einen Achsstummel aufweisen, wobei der Achsstummel in einer Kulissenführung angeordnet ist.

3. Rollensperrfangvorrichtung nach Anspruch 1 oder 2, wobei wenigstens eine Kulissenplatte vorgesehen ist, die mit Kulissenführungen für die Fangrollen versehen ist.

4. Rollensperrfangvorrichtung nach Anspruch 3, wobei der Keilkörper zwischen zwei Kulissenplatten angeordnet ist, die jeweils mit Kulissenführungen für die Fangrollen versehen sind.

5. Rollensperrfangvorrichtung nach wenigstens einem der vorstehenden Ansprüche, wobei die Auslösevorrichtung zwei Auslösebleche aufweist, wobei jedes der Auslösebleche an jeweils einer der Fangrollen angreift und jedes Auslöseblech in und entgegen der Längsrichtung bewegbar am Keilkörper gehalten ist, wobei insbesondere die Auslösebleche am Umfang der Fangrollen angreifen, wobei insbesondere jedes Auslöseblech einen sich parallel zur Längsrichtung erstreckenden Abschnitt und einen gegenüber der Längsrichtung in Richtung auf den Keilkörper zu abgewinkelten Abschnitt aufweist, wobei ein Umfang der dem Auslöseblech zugeordneten Fangrolle in der Freigabeposition auf dem abgewinkelten Abschnitt aufliegt, wobei insbesondere jedes Auslöseblech unmittelbar vor dem Übergang von dem sich in Längsrichtung erstreckenden Abschnitt in den abgewinkelten Abschnitt eine Durchgangsöffnung aufweist, deren Größe auf den Umfang der Fangrolle abgestimmt ist, so dass in der Sperrposition ein Umfang der Fangrolle zumindest abschnittsweise durch die Durchgangsöffnung hindurchragen kann.

6. Rollensperrfangvorrichtung nach wenigstens einem der vorstehenden Ansprüche, wobei die Auslösevorrichtung eine Auslösewippe oder ein Auslöseteil aufweist, die bzw. das parallel zur Längsrichtung bewegbar am Keilkörper gehalten ist.

7. Rollensperrfangvorrichtung nach Anspruch 6, **dadurch gekennzeichnet, dass** die Auslösewippe oder das Auslöseteil an den Fangrollen angreift.

8. Rollensperrfangvorrichtung nach einem der vorstehenden Ansprüche, wobei die Auslösevorrichtung mit einer in Längsrichtung verlaufenden Betätigungsstange verbunden ist.

9. Rollensperrfangvorrichtung nach Anspruch 8, **dadurch gekennzeichnet, dass** die Betätigungsstange wenigstens zwei, in Längsrichtung voneinander beabstandete Verdickungen aufweist, wobei die Betätigungsstange mittels der Verdickungen an einem Gehäuse geführt ist.

10. Rollensperrfangvorrichtung nach einem der vorstehenden Ansprüche, wobei die Auslösevorrichtung mit einem Aktor verbunden ist.

11. Rollensperrfangvorrichtung nach einem der vorstehenden Ansprüche, wobei der Aktor an einer mit dem Keilkörper, insbesondere starr, verbundenen Haltebauteil, insbesondere an einer Kulissenplatte, angeordnet ist.

12. Anordnung mit einer Verfahreinrichtung, insbesondere einer Hubeinrichtung, wenigstens einer, insbesondere vertikal angeordneten, Verfahrschiene, wobei die Verfahreinrichtung entlang der wenigstens einen Verfahrschiene bewegbar ist, wobei die Verfahrschiene einen U-artigen Querschnitt oder einen I-artigen Querschnitt mit einer Basis und wenigstens zwei von der Basis ausgehenden und einander gegenüberliegenden Schenkeln aufweist, mit einer Rollensperrfangvorrichtung nach einem der vorstehenden Ansprüche, wobei die Rollensperrfangvorrichtung mit der Verfahreinrichtung verbunden ist, wobei wenigstens der Keilkörper und die wenigstens zwei Fangrollen zwischen den zwei einander gegenüberliegenden Schenkeln der Verfahrschiene angeordnet sind, wobei jeweils mindestens eine erste Fangrolle der Rollensperrfangvorrichtung in einer Freigabeposition unmittelbar benachbart aber beabstandet zu der Innenseite eines ersten Schenkels angeordnet ist und in einer Sperrposition an der Innenseite des ersten Schenkels anliegt, und wobei mindestens eine zweite Fangrolle der Rollensperrfangvorrichtung in einer Freigabeposition unmittelbar benachbart aber beabstandet zu der Innenseite eines zweiten Schenkels angeordnet ist und in einer Sperrposition an der Innenseite des zweiten Schenkels anliegt.

13. Anordnung nach Anspruch 12, wobei die Rollensperrfangvorrichtung vollständig innerhalb einer Kontur angeordnet ist, die durch die Basis und die beiden gegenüberliegenden Schenkel der Schiene definiert ist.

14. Anordnung nach Anspruch 12 oder 13, wobei Mittel zum Bewegen der Auslösevorrichtung relativ zum Keilkörper vorgesehen sind, wobei insbesondere die Mittel zum Bewegen einen Aktor aufweisen, der, insbesondere mittels einer Betätigungsstange, mit der Auslösevorrichtung und mittels einer Halteplatte, insbesondere starr, mit dem Keilkörper verbunden ist.

15. Anordnung nach einem der Ansprüche 12 bis 14, **dadurch gekennzeichnet, dass** die Verfahrschiene in vertikaler Richtung verläuft und die Verfahreinrichtung als Hub- und Absenkeinrichtung ausgebildet ist.
